# EUROPEAN PATENT SPECIFICATION

(11) **EP 0 345 818 B1**
(45) Date of publication and mention of the grant of the patent: **04.12.1996**
(21) Application number: 89110631.2
(22) Date of filing: 12.06.1989
(51) Int. Cl.: G08G 1/09

(54) **Route guidance system for a mobile telecommunication system**
Strassenleitsystem für ein bewegliches Fernmeldeverbindungssystem
Système de guidage routier pour un système mobile de télécommunication

(30) Priority: 10.06.1988 JP 141546/88; 10.06.1988 JP 141547/88; 10.06.1988 JP 141548/88; 10.06.1988 JP 141549/88
(43) Date of publication of application: 13.12.1989
(73) Proprietor: Oki Electric Industry Company, Limited, Tokyo 105 (JP)
(72) Inventor: Yoneyama, Hiroto, Minato-ku Tokyo (JP); Yashiki, Atushi, Minato-ku Tokyo (JP); Kodama, Toshiyuki, Minato-ku Tokyo (JP)
(74) Representative: Betten & Resch

(56) References cited:
- EP-A- 0 024 010
- US-A- 4 182 989
- INTERNATIONALES VERKEHRSWESEN, vol. 37, no. 5, September/October 1985, pages 336-343, Hildesheim, DE; P. BRÄGAS: "Leit- und Informationssysteme im Kraftfahrzeug - ein Beitrag zur Verbesserung des Verkehrsablaufs und der Verkehrssicherheit
- FUNKTECHNIK, vol. 41, no. 7, pages 273-278, Heidelberg, DE; C. REUBER:
- "Elektronik für Information und Navigation im Auto"

## Description

The present invention relates to a mobile telecommunications system and, more particularly, to a route guidance system applicable to a mobile telecommunications system for guiding an automotive vehicle or similar vehicle along a particular route to a destination.

### Description of the Prior Art

Typical of the route guidance system for a mobile telecommunications system with which the present invention is concerned is a navigation system for automotive vehicles. In an automotive vehicle navigation system, an on-board unit mounted on a vehicle has a CD-ROM or similar optical storing medium which is loaded with stored map data and a CRT or similar display capable of displaying the map data thereon. With this system, it is possible to indicate the instantaneous position of the vehicle on a map being shown on the display. The navigation system is implemented by a transmitter mounted on a roadside sign plate, for example, and a receiver mounted on a vehicle, the transmitter transmitting position data representative of the transmitter to the receiver. Every time the receiver receives position data from such a transmitter, the instantaneous position of the vehicle appearing on the display is updated. During the interval between the reception of position data from one transmitter and the reception of position data from the next transmitter, the position of the on-board unit is updated automatically as determined on the basis of the travelling direction and travelling velocity of the vehicle. The occupant of the vehicle is allowed to recognize the varying position of the vehicle by observing the position in the map being indicated on the display and to thereby determine whether or not the vehicle is following the right way to the destination.

The prior art navigation system stated above has various drawbacks left unsolved, as follows. The occupant has to select an adequate route to the destination by the own discretion, i.e., all that can be seen is whether or not the vehicle is travelling the right way to a destination. The occupant, of course, cannot select an optimum route matching the instantaneous traffic conditions because the occupant determines the route to a destination by mere conjecture. When the instantaneous traffic conditions are changed due to an accident or similar cause, the occupant of the vehicle cannot cope with it immediately and, in the worst case, only particular roads will congest with a number of vehicles. Further, each vehicle has to be furnished with map data. It is extremely difficult to furnish a vehicle with minute map data which cover all the possible areas of interest due to, among others, the limited capacity of the previously mentioned storing medium. This practically inhibits the occupant from selecting an adequate route, depending on the destination. Map data in itself is sequentially updated with time and is sometimes temporarily changed in association with the unusual occurrences such as traffic accidents and road constructions. Hence, even if such variable data are prepared beforehand, it is almost impracticable to deal with the change or the addition of data rapidly.

A mobile telecommunications system according to the preamble of claim 1 is known from Internationales Verkehrswesen, vol. 37, No. 5, Sept./Oct. 1995, p. 336 - 343 and from Funktechnik, vol. 41, No. 7, p. 273 - 278 under the name "ALI-System". The base stations thereof contain directional instructions for all destinations. These directional instructions may be changed by a system center depending on traffic conditions. These mobile stations communicate with the base stations. According to the destination selected by the mobile station, the base station selects the corresponding directional instruction and transfers it to the mobile station.

### SUMMARY OF THE INVENTION

It is therefore an object of the present invention to provide a route guidance system for a mobile telecommunications system which guides a vehicle to any desired destination along an optimum route in association with the varying traffic conditions.

This object is solved by the features of claim 1.

In accordance with the present invention, when a mobile station sends a guidance request for requesting route guidance data, the request is reported to a system center via a telecommunications network. On receiving the request, the system center selects an optimum route for a mobile station to follow in consideration of the instantaneous traffic conditions and transmits the optimum route in the form of optimum route data to the mobile station of concern over the telecommunications network. The mobile station, having received the optimum route data, guides the vehicle along the optimum route on the basis of the route data and base station data which are transmitted from base stations. When the mobile station determines when the mobile station has been brought out of the expected route, it retransmits the guidance request to the system center.

When the system center, following the transmission of the optimum route data to the mobile station, recognizes that the optimum route data being held should be changed due to a change in the traffic conditions, it changes the optimum route data and holds the resulting new data while transmitting the new data to the mobile station of concern.

Further, in accordance with the present invention, the system center, upon reception of the guidance request from the mobile station, selects an optimum route for the mobile station to follow and produces route command data associated with the optimum route. The optimum route and route command data are sent to the mobile station of concern in the form of optimum route data. On receiving base station data from a base station associated with the optimum route data, the mobile station outputs a route command associated with the base station for thereby guiding the vehicle along the optimum route.

### BRIEF DESCRIPTION OF THE DRAWINGS

The objects and features of the present invention will become more apparent from the consideration of the following detailed description taken in conjunction with the accompanying drawings in which:
FIG. 1 is a schematic block diagram of a mobile telecommunications system embodying the present invention which is applied to road traffic and implemented as an on-road vehicle telecommunications system by way of example;
FIG. 2 is a schematic block diagram representative of a specific hierarchical configuration of the on-road vehicle telecommunications system shown in FIG. 1;
FIG. 3 shows a specific format of a vehicle-oriented code applicable to the system of FIG. 1;
FIG. 4 indicates a specific frame format also applicable to the system of FIG. 1;
FIG. 5 is a schematic block diagram showing a specific construction of a mobile station or on-board unit included in the system of FIG. 1;
FIG. 6 is a sketch of a route which a subscriber vehicle included in the system of FIG. 1 may follow toward a destination;
FIG. 7 exemplarily shows a guidance list associated with the route illustrated in FIG. 6;
FIG. 8 is a sketch showing a specific route which a subscriber vehicle may follow in accordance with an alternative embodiment of the present invention;
FIG. 9 exemplarily shows a guidance list data stored in which are changed in response to a change of the route;
FIG. 10 is a sketch showing a specific route of a subscriber vehicle which is selected in response to a change of a guidance code in accordance with an alternative embodiment of the present invention;
FIG. 11 indicates a guidance list data stored in which are changed in response a change of the route as shown in FIG. 10;
FIG. 12 is a sketch showing a specific route which a subscriber vehicle may follow in accordance with an alternative embodiment of the present invention; and
FIG. 13 shows a specific guidance list including route commands which are associated with the route illustrated in FIG. 12.

### DESCRIPTION OF THE PREFERRED EMBODIMENTS

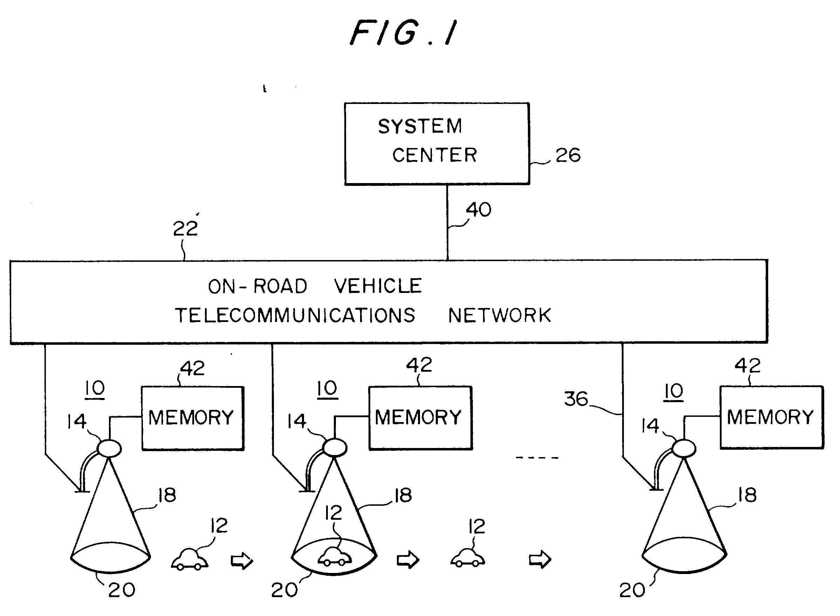

Referring to FIG. 1 of the drawings, a mobile telecommunications system embodying the present invention is shown and implemented as an on-road vehicle telecommunications system applicable to land traffic, especially road traffic which involves automobiles and other similar vehicles. To this mobile telecommunications system, the technology disclosed in the co-pending patent application entitled "Mobile Telecommunications System Using Distributed Miniature Zones" and assigned to the same assignee as the present application is advantageously applicable. As shown, a plurality of roadside stations 10 are located along a road such as an ordinary road or a thruway at the intervals of several hundred meters or several kilometers, for example. The distance between nearby roadside station 10 may be suitably selected in matching relation to the regulation speed of the road, for example. Each roadside station 10 is a land station which serves as a base station capable of communicating with a subscriber vehicle 12 over a radio channel.

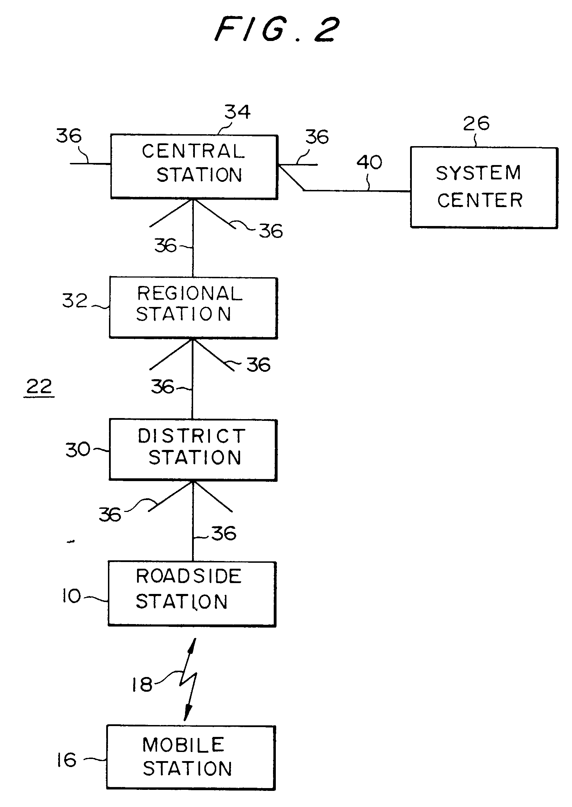

Each roadside station 10 covers a limited service area or zone 20 and has a transmitter/receiver 14 for transmitting and receiving an electromagnetic wave 18 from an on-board unit, or mobile station, 16 (FIG. 2) which is mounted on a subscriber vehicle 12 that is present in the zone 20. A characteristic feature of the illustrative embodiment is that the roadside stations 10 are distributed at intervals and each zone 20 is far smaller than the interval between nearby roadside stations 10. The diameter of each zone 20 may be of the order of several ten meters to a hundred meters, for example. Therefore, the nearby zones 20 leave therebetween an area in which the mobile station 16 is substantially not responsive to any of the electromagnetic waves 18 issuing from the roadside stations 10, i. e. a no-wave area. A vehicle 12 can communicate with any of the roadside stations 10 only when it is operated within the zone 20 defined by the roadside station 10.

Having the above configuration, the illustrative embodiment allows the nearby roadside stations 10 to use the same frequency repetitively and effectively. Basically, therefore, the radio links between the roadside stations 10 and the mobile stations 16 included in the entire system can be implemented by a single frequency. A system with which full-duplex communication is available uses a pair of frequencies, one for an up-going channel and the other for a down-going channel. This eliminates the need for the switchover of frequency which is indispensable with the prior art cellular system. Having these characteristic features, the system will be referred to as a distributed miniature zone system while each zone 20 will be referred to as a miniature zone. It is noteworthy that the radio communication between the roadside stations 10 and the mobile stations 16 is hardly susceptible to fading because it is (?) the propagation of an electromagnetic wave which occurs within an extremely short period of time. The communication, therefore, can be effected at a high speed such as 256 kilobits per second to 1. 5 megabits per second. In the illustrative embodiment, it is especially preferable that a communication rate of 512 kilobits per second or so be selected to promote cost-effective system configuation.

The roadside stations 10 form a part of an on-road vehicle telecommunications network 22 and, in this particular embodiment, they are capable of accessing an on-road vehicle telecommunications system center 26 and other similar communication facilities. Adopting a hierarchical configuration as shown in FIG. 2 by way of example, the on-road vehicle telecommunications network 22 performs switching between the system center 26 and the mobile stations 16.

The distributed miniature zone communication system described above promotes high-speed communication between the mobile stations 16 and the roadside stations 10 and, therefore, implements a variety of route guidance services including high-speed data communications. Typical examples are a navigation service for guiding an automobile or similar subscriber vehicle 12 along an adequate route which may depend on the degree of traffic congestion and weather, and a data communication service for allowing the mobile stations 16 to communicate with the system center 26 via the on-road vehicle telecommunications network 22 so that the operations of a great number of vehicles 12 may be managed efficiently, as in the illustrative embodiment.

Referring the FIG. 2, the hierarchy of the on-road vehicle telecommunications network 22 is constituted by district stations or offices 30 each accommodating a plurality of roadside stations 10 which are distributed in a certain district, regional stations or offices 32 each accommodating a plurality of district stations 30 over a certain area, and central stations 34 each accommodating a plurality of regional stations 32. The associated stations 30, 32 and 34 inclusive of the roadside stations 10 will be collectively called a land station hereinafter. In the illustrative embodiment, the channels between the associated district station 30, regional station 32 and central station 34 are configured in a tree-like network which is constituted by basic trunks, transversal trunks or similar trunks 36. On the other hand, the central stations 34 are interconnected by a mesh type network. The present invention, of course, is not limited to such a network configuration and may be practiced with any other kind of hierarchy which matches with the nature of a road, e.g. , an ordinary road or a thruway or a linear network.

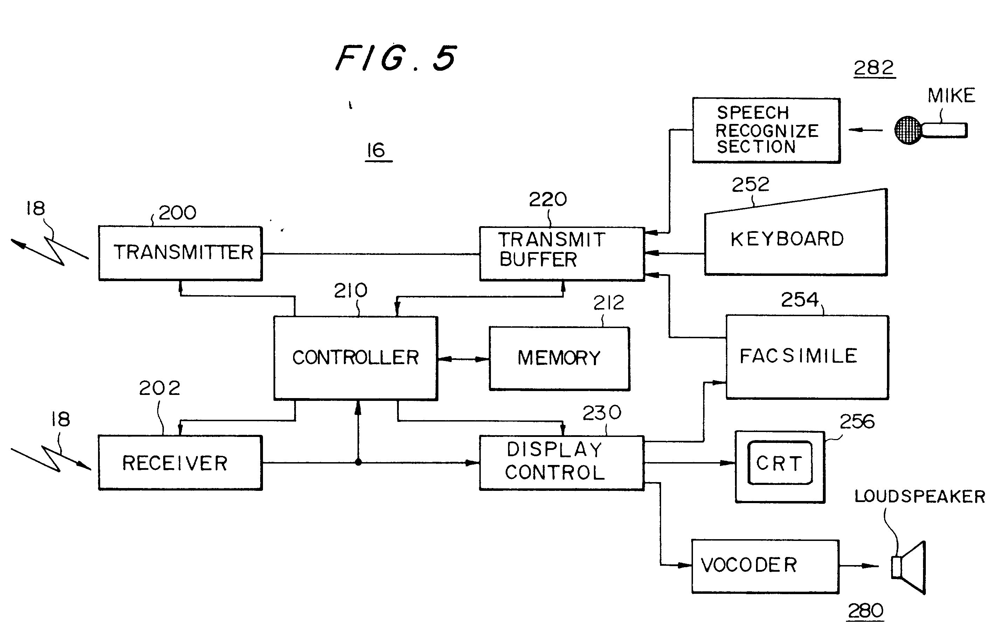

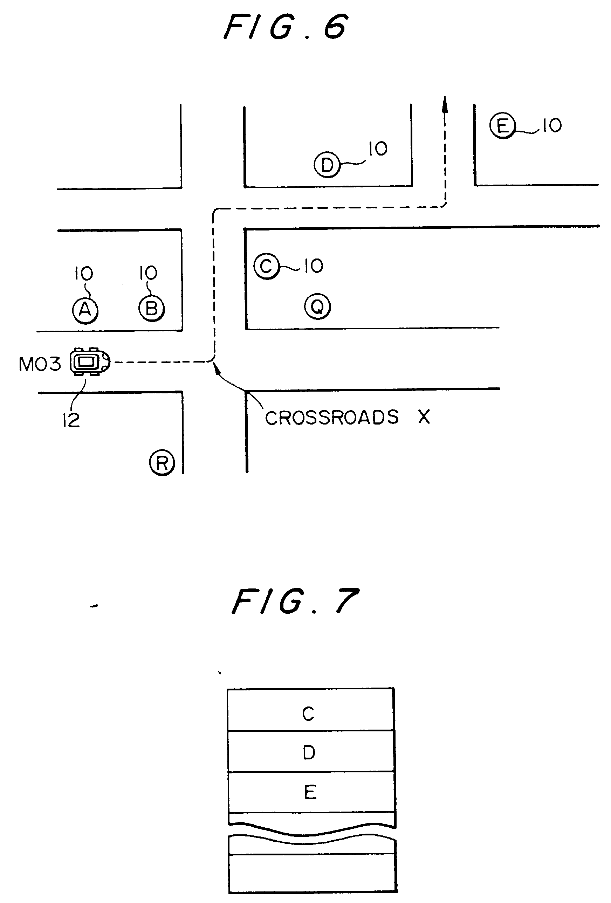

The system center 26 plays the role of a data processing system assigned to the navigation of the subscriber vehicles 12, for example. More specifically, the system center 26 receives road information as well as other traffic information from the on-road vehicle telecommunications network 22 and external information centers (not shown) so as to estimate future traffic conditions. When any of the mobile stations 16 requests the system center 26 to send a guidance code which indicates a route to the destination, the system center 26 selects an optimum route on the basis of the estimated traffic conditions, produces a guidance code, and sends it to the mobile station 16 of interest. It this particular embodiment, the guidance code is representative of station codes assigned to those roadside stations 10 which are located along the route to the destination of the mobile station 16. Each mobile station 16 has a storage 212 (FIG. 5) in which the guidance code may be written in the form of a guidance list (FIG. 7), as described later in detail. The system center 26 is accommodated in the central stations 34 by trunks 40. The system center 26 may of course be connected to the regional centers 32 or the district centers 30.

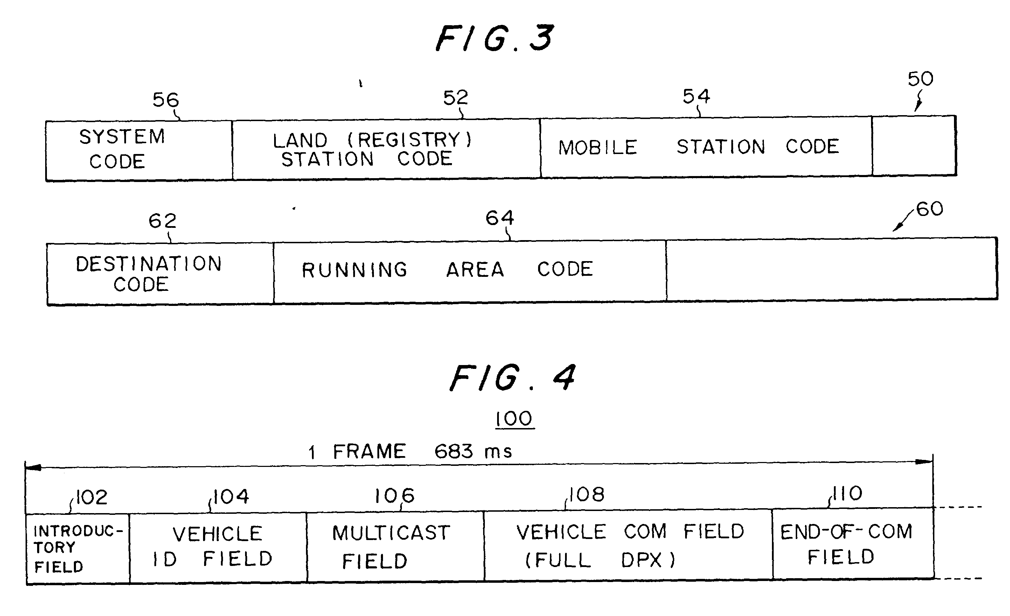

As shown in FIG. 3, in the illustrative embodiment, a vehicle-oriented code for specifying a mobile station 16 is made up of a static code 50 and a dynamic code 60. Apart from the function of providing a mobile station 16 with an identification number within the system, the static code 50 is closely related to the number system of calls which the mobile station 16 may receive from the on-road vehicle telecommunications system center 26. The static code 50 includes a mobile station code 54 for specifying a mobile station 16, a registry land station code 52 representative of a land station where a mobile station 16 is registered, and a system code 56 for identifying the system in distinction from the other systems.

The dynamic code 60 is associated with the moving state of the subscriber vehicle 12 and effectively used to grasp the current condition of the vehicle 12 for a navigating purpose. In this sense, the dynamic code 60 is a code unique to a subscriber vehicle 12 and associated with the district or region in which the vehicle 12 is operated as well as its travelling condition. The dynamic code 60, therefore, plays an important role in allowing the system center 26 to locate a vehicle 12 for a paging purpose and supplying a vehicle 12 with guide information for routing it to a destination. In the illustrative embodiment, the dynamic code 60 includes a destination code 62 representative of a destination of the subscriber vehicle 12 and a running area code 64 representative of an area in which the vehicle 12 is running. In the specific embodiment, when a link number code representative of a particular destination is set in the destination code 62 by way of example, the code 62 is sent to the system center 28 in the form of a guidance request.

As FIG. 1 schematically indicates, each roadside station 10 has a memory 42 which includes an area for storing static information associated with the station 10 such as its own location and bearings and information associated with neighboring roadside stations 10. The roadside station 10 sends such information to all of the subscriber vehicles 12 which move past the station 10. In the illustrative embodiment, the static information may be sent in the form of a message such as "Crossroads X is located 300 meters ahead. Roadside stations A, B, and C are situated respectively on the roads extending straight, to the left and to the right from the crossroads".

In the illustrative embodiment, the mobile station 16 is mounted on an automobile or similar subscriber vehicle 12 and transmits/receives navigation information, operation supervisory information and other similar data, messages and video signals with the roadside stations 10 while allowing an occupant to see such signals visually and/or auditorily. FIG. 5 shows a specific construction of the mobile station 16 in a block diagram. As shown, the mobile station 16 includes a key input unit or keyboard 252 for entering the destination code 62, guidance request and so forth, and a video display implemented by a cathode ray tube (CRT) 256, a vocoder 280, a speech recognizing unit 282 and a facsimile transceiver 254 which individually interface the roadside station 10 to the vehicle occupant.

A controller 210 collectively governs the operations of the various components of the mobile station 16. Specifically, the controller 210 controls a transmitter 200 and a receiver 202 which interchange electromagnetic waves 18 with the roadside station 10, a display control 230 associated with the vocoder 280, CRT 256 and facsimile transceiver 254, a transmission buffer 220 for temporarily storing an output of the key input unit 252, facsimile transceiver 254 and speech recognizing unit 252, etc. The controller 210 is interconnected to the previously mentioned memory 212 in which a guidance code received from the on-road vehicle telecommunications system center 26 may be written in the form of a guidance list.

The controller 210 of the mobile station 16 which has stored such a guidance list confirms and selects an adequate route for the mobile station 16 to travel on the basis of the static information sent from the latter to the former, and then it informs the vehicle occupant of the route to follow via the CRT 256 and/or the vocoder 280. This allows the vehicle occupant to know the route along which the vehicle 12 is to be guided beforehand, so that it is not necessary to show a map indicative of the route on the display 256. Of course, latest map information is available from the system center 26 whenever needed. The received map information may be indicated on the display 256 or outputted by the facsimile transceiver 254 as the case may be.

The mobile station 16 has a random number table function so that the road station 10 may select an idle channel out of a plurality of channels assigned to the link 18 between the stations 10 and 16 by polling. The mobile station 16 is communicable with the roadside station 10 over the selected idle channel.

In the embodiment, a communication between the on-board mobile station 16 and the base station 10 is effected by polling which uses a frame 100 having a format which is shown in FIG. 4. In the illustrative embodiment, the frame 100 has a period of 683 milliseconds (ms), and a plurality of channels are multiplexed in a great number of time slots of the frame 100. In principle, a necessary two-way communication is completed within one frame period. The radio links 18 are implemented by a single frequency. In the case of full-duplex communication, each of an up-going and a down-going channel is implemented by a different frequency. Nevertheless, since such frequencies are fixed, a subscriber vehicle 12 will be served by the same frequencies throughout the distributed zones 20 of the roadside stations 10. While a communication in principle is completed within one frame period, it may be implemented by a plurality of frames when, for example, the amount of information is extraordinary large such as with a picture or when the radio communication conditions are poor.

As shown in FIG. 4, the frame 100 is headed by an introductory field 102 which includes a preamble, a synchronizing signal, a polling identification (ID) signal, and a code assigned to a roadside station 10. The roadside station 10 polls the mobile station 16 being operated in its own zone 20 at a predetermined period by using the introductory field 102 of the frame 100. The mobile station 16 is held in a receive mode while in an idle state and is brought into a transmit mode when the introductory field 102 is fully recieved.

The introductory field 102 is followed by a subscriber ID field 104 which allows the mobile station 16 to send its own vehicle codes 50 and 60 while allowing the roadside station 10 to recognize it. Advantageously, two blocks may be sent repetitively so as to achieve a far higher subscriber recognition rate. In response to the polling, the mobile station 16 selects an idle channel by using the random number table. The static subscriber code 50 and dynamic vehicle-oriented code 60 are transmitted to the roadside station 10 over the idle channel. The roadside station 10 registers the mobile station 16 of interest only if the codes 50 and 60 are correctly received over the idle channel without any conflict.

In the illustrative embodiment, the subscriber ID field 104 is followed by a multicast communication field 106. By using the multicast communication field 106, the roadside station 10 sends to the mobile station 16 traffic information and other beacon type dynamic navigation information as well as registration response signal (ACK or NACK). If necessary, the roadside station 10 sends to the mobile station 16 registered by using the vehicle ID field 104 channel information to be used by a vehicle communication field 108, which will be described, together with a signal ACK.

The vehicle communication field 108 is provided next to the simulcast field 106 of the frame 100. In the illustrative embodiment, a full-duplex communication is held between the roadside station 10 and the mobile station 16 by using the vehicle communication field 108. For the full-duplex communication, an up-going and a down-going channel each having a different frequency and selected by the roadside station 10 are used. However, the subscriber vehicle 12 is served by the same frequencies in the zones 20 which are defined by the nearby roadside stations 10. The full-duplex communication, of course, may be replaced with half-duplex or one-way communication. During the vehicle communication field 106, the mobile station 16 and the system center 26 interchange a guidance code representative of navigation information, operation supervisory information, message, and video image signal. Such information is imparted to the vehicle occupant in the form of a picture or a speech.

FIG. 6 is a sketch of a specific route which a subscriber vehicle 12 sent a guidance request to the system center 26 may follow, and which is useful for understanding the approach of the illustrative embodiment. Assume that the subscriber vehicle 12 shown in FIG. 6 is loaded with a mobile station or on-board unit to which a mobile station code M03 is assigned. To send a guidance request to the system center 26, the occupant of the vehicle 12 manipulates the key input unit 252 to enter a destination which may be a link number code assigned to a particular roadside station 10 by way of example, as in the previous embodiment. Assuming that the occupant enters a link number code assigned to the roadside station E as a destination, the entered code is stored in the transmission buffer 220 of the on-board unit M03 in the form of the destination code 62 of the dynamic code 60.

The controller 210 transmits the destination code 62 to a roadside station 10 which the mobile station M03 reaches for the first time after the entry of the code 62. Specifically, as the mobile station M03 enters the service area 20 of a roadside station A for the first time, the controller 210 of the on-board unit M03 sends the dynamic code 62 including the destination code 62 to the roadside station A by using the vehicle ID field 104 of the frame 100. On receiving the dynamic code 60 from the mobile station M03, the roadside station A once stores it in the memory 42 and then transmits it to the on-road vehicle telecommunications network 22 together with the other codes of the mobile station M03. These codes are switched by the telecommunications network 22, so that a code representative of a guidance request is transmitted to the system center 26.

The system center 26 received the destination of the mobile station M03 selects an optimum route to the roadside station or destination E by taking account of the current traffic conditions also. Further, the system center 26 estimates the further movement of the mobile station M03 and thereby determines a roadside station B which can send a guidance code to the mobile station M03. Then, the system center 26 sends to the telecommunications network 22 a guidance code associated with a roadside station C which immediately follows the roadside station B to a roadside station or destination E. On receiving the guidance code meant for the mobile station M03, the roadside station B stores it in the memory 42 and monitors its own zone 20 in which the mobile station M03 is expected to enter.

When the roadside station B finds the mobile station M03 in its zone 20, it sends the guidance code destined to the station M03 by using the vehicle communication field 108 of the frame 100. As the mobile station M03 receives the guidance code, the controller 210 of the station M03 stores it in the memory 212 in the form of a guidance list as shown in FIG. 7. At the same time, the mobile station M03 receives from the roadside station B information which shows the surroundings of the station B, e.g. , a message "Crossroads X is located 300 meters ahead. A straight run across the crossroads X will bring you to a roadside station Q, and a right and a left turn will bring you to roadside stations R and C, respectively".

By comparing the roadside station data with the guidance list, the controller 210 of the on-board unit M03 shows the vehicle occupant a direction for driving the vehicle 12. In this instance, since the roadside station C is recorded in the guidance list, the on-board unit M03 instructs the occupant to make a left turn at the crossroads X which is situated 300 meters ahead. For this instruction, the vocoder 280 may produce an audible message such as "Turn left at crossroads X which is located 300 meters ahead" or, alternatively, the display 256 may provide a simple visible direction command thereon.

As the mobile station M03 turns to the left at the crossroads X to enter the zone 20 of the roadside station C, the roadside station C sends static information including its own positive information and roadside station information to the mobile station M03 by using the introductory field 102 of the frame 100. In response, the controller 210 of the on-board unit M03 compares the position data of the roadside station C with the guidance list to see that the vehicle 12 is following the right way. Again, the on-board unit M03 shows the occupant the next path to follow in response to the roadside station information which is also fed from the roadside station C. In this manner, the mobile station M03 is guided to the roadside station or destination E by way of the roadside station D.

As described above, in the illustrative embodiment, a subscriber vehicle 12 is capable of reaching a destination by way of an optimum route which matches the instantaneous traffic conditions. Since a travelling direction is instructed by an on-board unit 16 of a subscriber vehicle 12, an occupant needs only to steer the vehicle 12 as instructed by the on-board unit 16 and does not have to select a route on a map being displayed, i.e. , map information is not necessary. Further, since the optimum route is prepared by the system center 26, the traffic conditions can be grasped and controlled collectively to thereby promote distributed flows of traffic.

An alternative approach available with the mobile telecommunications system of the present invention will be described. In this alternative embodiment, the controller 210 of each mobile station 16 has a capability of recognizing that the station 16 has been brought out of a correct route selected by the system center 26. Specifically, when a mobile station 16 is off a correct route, the controller 210 of the mobile station 16 sees such a condition on the basis of static data received from a roadside station 10 and guidance list data received from the system center 26 in the form of a guidance code. Then, the controller 210 retransmits a guidance request to the system center 26, requesting the latter to send a guidance code.

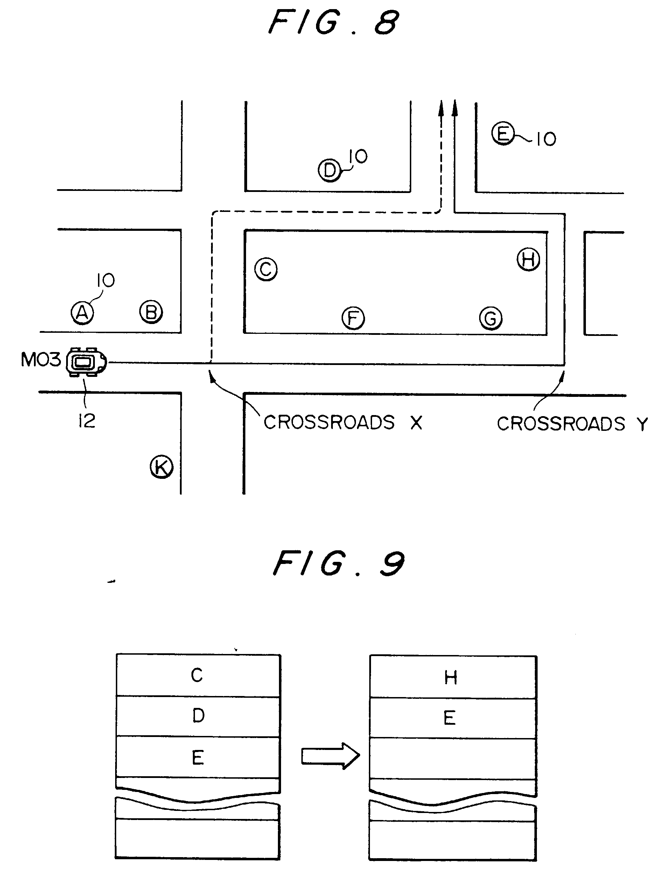

FIG. 8 is a sketch of a specific route which a subscriber vehicle 12 sent a guidance request to the system center 26 may follow, and which is useful for understanding the approach of the illustrative embodiment. Assume that the subscriber vehicle 12 shown in FIG. 8 is loaded with a mobile station or on-board unit to which a mobile station code M03 is assigned. To send a guidance request to the system center 26, the occupant of the vehicle 12 manipulates the key input unit 252 to enter a destination which may be a link number code assigned to a particular roadside station 10 by way of example, as in the previous embodiment. Assuming that the occupant enters a link number code assigned to the roadside station E as a destination, the entered code is stored in the transmission buffer 220 of the on-board unit M03 in the form of the destination code 62 of the dynamic code 60.

The controller 210 transmits the destination code 62 to a roadside station 10 which the mobile station M03 reaches for the first time after the entry of the code 62. Specifically, as the mobile station M03 enters the service area 20 of a roadside station A for the first time, the controller 210 of the on-board unit M03 sends the dynamic code 62 including the destination code 62 to the roadside station A by using the vehicle ID field 104 of the frame 100. On receiving the dynamic code 60 from the mobile station M03, the roadside station A once stores it in the memory 42 and then transmits it to the telecommunications network 22 together with the other codes of the mobile station M03. These codes are switched by the telecommunications network 22, so that a code representative of a guidance request is transmitted to the system center 26.

The system center 26 received the destination code of the mobile station M03 selects an optimum route to the roadside station or destination E by taking account of the current traffic conditions also. Further, the system center 26 estimates the further movement of the mobile station M03 and thereby determines a roadside station B which can send a guidance code to the mobile station M03. In the case that the route indicated by a dotted line in FIG. 8 is the instructed optimum route, the system center 26 sends to the telecommunications network 22 a guidance code associated with a roadside station C which immediately follows the roadside station B to the roadside station or destination E. On receiving the guidance code meant for the mobile station M03, the roadside station B stores it in the memory 42 and monitors its own zone 20 in which the mobile station M03 is expected to enter.

When the roadside station B finds the mobile station M03 in its zone 20, it sends the guidance code destined to the station M03 by using the vehicle communication field 108 of the frame 100. As the mobile station M03 receives the guidance code, the controller 210 of the station M03 stores it in the memory 212 in the form of a guidance list as shown on the left-hand side of FIG. 9. At the same time, the mobile station M03 receives from the roadside station B information which shows the surroundings of the station B, e. g. , a message "Crossroads X is located 300 meters ahead. A straight run across the crossroads X will bring you to a roadside station F, and a right and a left turn at the crossroads X will bring you to roadside station K and C, respectively".

By comparing the roadside station information with the guidance list, the controller 210 of the on-board unit M03 shows the vehicle occupant a direction for driving the vehicle 12. In this case, the on-board unit M03 instructs the occupant to make a left turn at the crossroads X which is situated 300 meters ahead, because the roadside station C is recorded in the guidance list. For this instruction, the vocoder 280 may produce an audible message such as "Turn left at crossroads X which is located 300 meters ahead" or, alternatively, the display 256 may provide a simple visible direction command thereon.

Assume that the subscriber vehicle 12 has been driven straight ahead across the crossroads X by mistake, as indicated by a solid line in the figure. Then, the mobile station M03 enters the zone 20 of the roadside station F and therefore receives static data associated with the station F during the introductory field 102 of the frame 100. By comparing position information included in the station F static data and the guidance list, the controller 210 of the on-board unit M03 determines, in the illustrative embodiment that the vehicle 12 is off the correct route. Then, the controller 210 retransmits a guidance request to the system center 26 while the on-board unit 16 lies in the zone 20 of the roadside station F. On receiving the guidance request, the system center 26 selects a new optimum route for the vehicle 12 and transmits it to the mobile unit M03 in the form of a guidance code. This guidance code is sent to the mobile station M03 when the latter passes a roadside station G, updating the memory 212 as shown on the right-hand side of FIG. 9.

Further, in response to surroundings information also sent from the roadside station G, the mobile station M03 instructs the occupant to make a left turn at crossroads Y, for example. As soon as the vehicle 12 makes a left turn at the crossroads Y to cause the on-board unit M03 to enter the zone 20 of the roadside station E, the roadside station E sends a static code representative of its position to the mobile station M03 by using the introductory field 102 of the frame 100. In response, the controller 210 compares the position data and the guidance list to see that the vehicle 12 is on the correct route. Further, the controller 210 informs the occupant of the subsequent path to follow, based on the surroundings data. In this manner, the mobile station M03 successfully reaches the destination or roadside station E by way of a roadside station H.

As stated above, in this particular embodiment, a mobile station 16 determined that its associated vehicle 12 is off a correct route retransmits a guidance request to the system center 26. This frees the system center 26 from the need for monitoring the running condition of the mobile station 16 and thereby reduces the load on the system center 26, while allowing the vehicle 12 to arrive at a destination via an optimum route which best matches the instantaneous traffic conditions. In addition, the illustrative embodiment promotes scattered flows of traffic because it is capable of grasping and controlling the traffic collectively.

An alternative route guidance approach which is also available with the mobile telecommunications system of the present invention will be described. In this particular embodiment, the system center 26 produces a guidance code and then stores it together with a mobile station code (FIG. 3) which is particular to a mobile station 16.

In this embodiment, when the system center 26 recognizes a change in the traffic conditions due to an accident, for example, it references the guidance code to search for a mobile station 16 which is related to the change. In the illustrative embodiment, the mobile station 16 is registered in any of the regional stations 32. Hence, the system center 26 searched for a mobile station 16 of interest confirms the location of that mobile station 16 through the regional or registry station 32. The system center 26 determines whether or not to produce a new guidance code on the basis of the current location of the mobile station 16 and, when produced such a code, sends it to the mobile station 16. Then, the memory 212 of the mobile station 16 is updated by the new guidance code, i. e. , it stores a new guidance list.

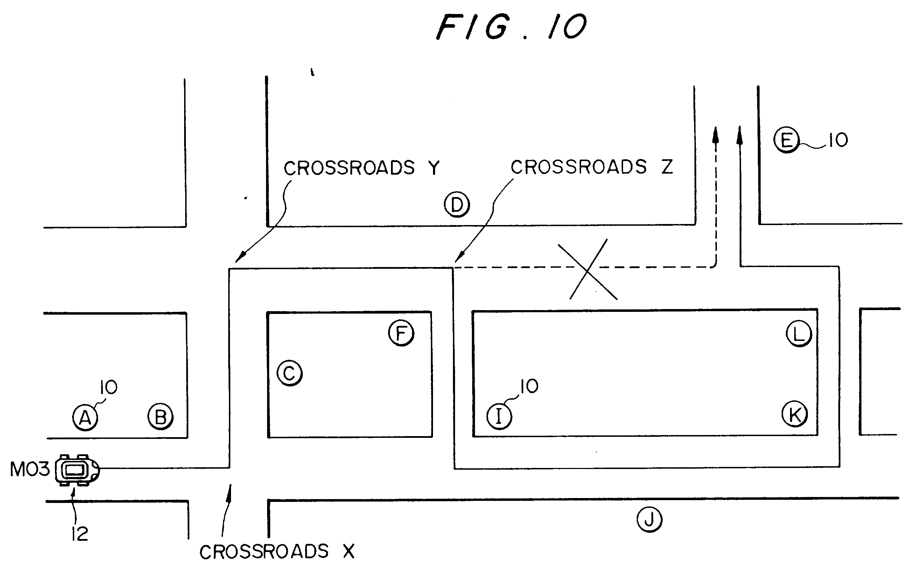

Referring to FIG. 10, there is shown a sketch of a specific route which a subscriber vehicle 12 sent a guidance request to the system center 26 may follow, and which is useful for understanding the approach of the illustrative embodiment. Assume that the subscriber vehicle 12 shown in FIG. 10 is loaded with a mobile station or on-board unit to which a mobile station code M03 is assigned. To send a guidance request to the system center 26, the occupant of the vehicle 12 manipulates the key input unit 252 to enter a destination which may be a link number code assigned to a particular roadside station 10 by way of example, as in the previous embodiment. Assuming that the occupant enters a link number code assigned to the roadside station E as a destination, the entered code is stored in the transmission buffer 220 of the on-board unit M03 in the form of the destination code 62 of the dynamic code 60.

The controller 210 transmits the destination code 62 to a roadside station 10 which the mobile station M03 reaches for the first time after the entry of the code 62. Specifically, as the mobile station M03 enters the service area 20 of a roadside station A for the first time, the controller 210 of the on-board unit M03 sends the dynamic code 62 including the destination code 62 to the roadside station A by using the vehicle ID field 104 of the frame 100. On receiving the dynamic code 60 from the mobile station M03, the roadside station A once stores it in the memory 42 and then transmits it to the on-road vehicle telecommunications network 22 together with the other codes of the mobile station M03. These codes are switched by the telecommunications network 22, so that a code representative of a guidance request is transmitted to the system center 26.

The system center 26 received the destination of the mobile station M03 selects an optimum route to the roadside station or destination E by taking account of the current traffic conditions also. Further, the system center 26 estimates the further movement of the mobile station M03 and thereby determines a roadside station B which can send a guidance code to the mobile station M03. Then, the system center 26 sends to the telecommunication network 22 a guidance code associated with a roadside station C which immediately follows the roadside station B to a roadside station or destination E. On receiving the guidance code meant for the mobile station M03, the roadside station B stores it in the memory 42 and monitors its own zone 20 in which the mobile station M03 is expected to enter.

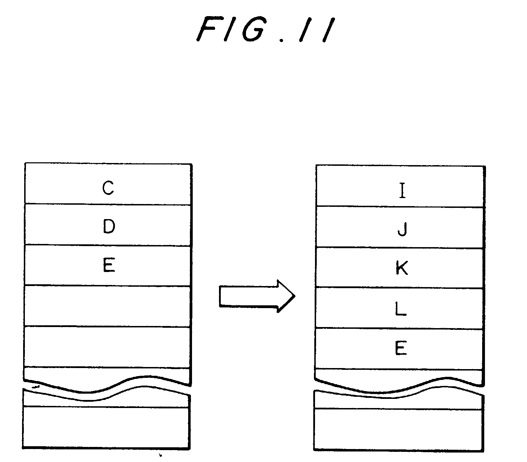

When the roadside station B finds the mobile station M03 in its zone 20, it sends the guidance code destined to the station M03 by using the vehicle communication field 108 of the frame 100. As the mobile station M03 receives the guidance code, the controller 210 of the station M03 stores it in the memory 212 in the form of a guidance list as shown on the left-hand side of FIG. 11. At the same time, the mobile station M03 receives from the roadside station B information which shows the surroundings of the station B, e. g. , a message "Crossroads X is located 300 meters ahead. A left turn at the crossroads X will bring you to a roadside station C, and a right turn to a roadside station K".

By comparing the roadside station data with the guidance list, the controller 210 of the on-board unit M03 shows the vehicle occupant a direction for driving the vehicle 12. In this instance, since the roadside station C is recorded in the guidance list, the on-board unit M03 instructs the occupant to make a left turn at the crossroads X which is situated 300 meters ahead. For this instruction, the vocoder 280 may produce an audible message such as "Turn to the left at crossroads X which is located 300 meters ahead" or, alternatively, the display 256 may provide a simple visible direction command thereon.

As the mobile station M03 turns to the left at the crossroads X to enter the zone 20 of the roadside station C, the roadside station C sends static information including its own positive information and roadside station information to the mobile station M03 by using the intoductory field 102 of the frame 100. In response, the controller 210 of the on-board unit M03 compares the position data of the roadside station C with the guidance list to see that the vehicle 12 is following the right way. Again, the on-board unit M03 shows the occupant the next path to follow in response to the roadside station information which is also fed from the roadside station C.

Assume that a traffic accident has occurred on the path between the roadside stations D and E after the transmission of the guidance code from the sytem center 26 to the mobile station 16, as shown in FIG. 10. Then, accident information is fed from an external data center or from the telecommunications network 22 to the system center 26. On receiving the accident information, the system center 26 searches for the mobile station M03 which is expected to move along the path between the roadside stations D and E, on the basis of the guidance code. After confirming that the system center 26 has sent a guidance code on the path between the roadside stations C and E to the mobile station M03, the system center 26 determines the current position of the mobile station M03 by way of the registry station 32.

As the system center 26 sees that the mobile station M03 is running in the neighborhood of the roadside station C through the registry station 32, it estimates the future movement of the mobile station M03 and prepares a guidance code indicative of the path extending from a roadside station I, which follows a roadside station F capable of transmitting the guidance code, to the roadside station or destination E. The guidance code is sent to the telecommunications network 22 while being stored in the system center 26 to prepare for a future change. On receiving the guidance code from the roadside station F, the controller 210 of the mobile station M03 changes the guidance list, as shown on the right-hand side of FIG. 11. Then, the mobile station M03 leads the occupant to the roadside station E according to the guidance list.

As described above, in the illustrative embodiment, the system is capable of immediately dealing with a sudden change in the traffic conditions ascribable to an accident, for example, and therefore guiding a subscriber vehicle 12 to a destination along an optimum route which matches the instantaneous traffic conditions. Since the occupant of the vehicle 12 is informed of a direction for driving the vehicle 12 by the on-board unit 16, the occupant needs only to steer the vehicle 12 as instructed by the on-board unit 16 and does not have to find out a route on a map. Another advantage attainable with this particular embodiment is that the traffic conditions can be grasped and controlled collectively, enhancing the scattered flows of traffic.

An alternative guidance scheme which may be implemented by the mobile telecommunications system of the present invention will be described. In the illustrative embodiment, in response to a guidance request from a mobile station 16, the system center 26 selects an optimum route and then sends a guidance code including command data to the mobile station 16. Specifically, the guidance code of this embodiment includes the station codes of roadside stations 10 which a mobile station 16 is expected to pass before reaching a destination and a command for guiding the mobile station 16 along those roadside stations 10. Assuming that a mobile station 16 will reach a certain roadside station 10 when it turns to the left at crossroads X by way of example, the command data may be provided in the form of a message "Turn left at crossroads X". The guidance code is stored in the memory 212 (FIG. 5) of the mobile station 16. The system center 26 is accommodated in the central station 34 by the trunk 40, although it may of course be connected to the regional station 32 or the district station 30 as the case may be.

In the illustrative embodiment, the controller 210 of the mobile station 16 having stored the guidance list locates its own station on the basis of the static data sent from the roadside station 10. Then, the controller 210 notifies the occupant of the instructed direction via the display 256 and/or the vocoder 280 according to the command being stored in the guidance list. This, as in the previous embodiment, allows the occupant to know the route to follow beforehand and thereby eliminates the need for a map with a particular route otherwise indicated on the display 256. Of course, latest map information is available from the system center 26 whenever the occupant desires. The receiver map information may be shown on the display 256 or outputted by the facsimile transceiver 254.

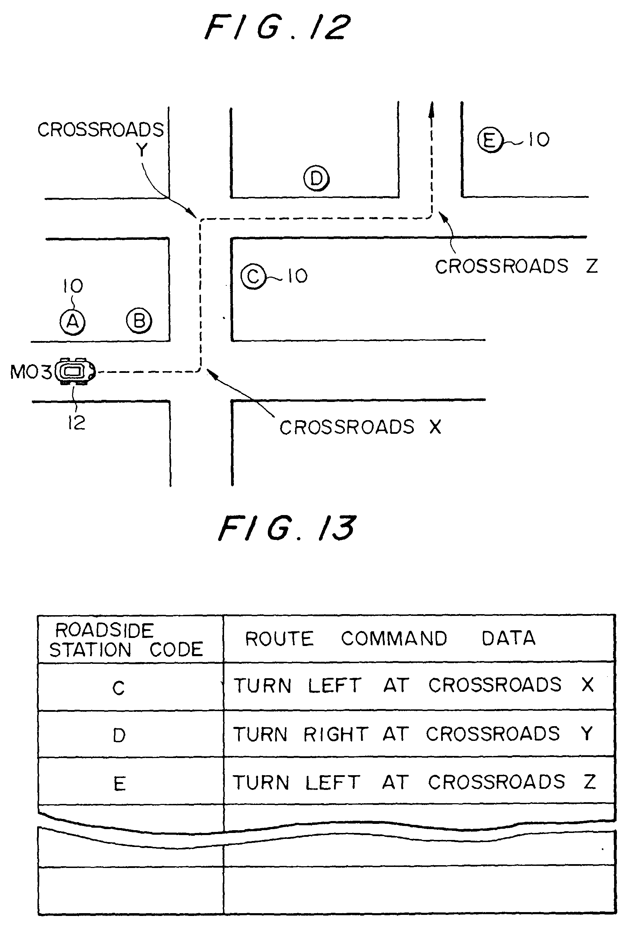

Fig. 12 exemplarily shows a route which a subscriber vehicle 12 sent a guidance request to the system center 26 may follow, for facilitating an understanding of the above-stated alternative embodiment. Assume that the subscriber vehicle 12 shown in FIG. 12 is loaded with a mobile station or on-board unit to which a mobile station code M03 is assigned. To send a guidance request to the system center 26, the occupant of the vehicle 12 manipulates the key input unit 252 to enter a destination which may be a link number code assigned to a particular roadside station 10 by way of example. Assuming that the occupant enters a link number code assigned to a roadside station E as a destination, the entered code is stored in the transmission buffer 220 of the on-board unit M03 in the form of the destination code 62 of the dynamic code 60.

The controller 210 transmits the destination code 62 to a roadside station 10 which the mobile station M03 reaches for the first time after the entry of the code 62. Specifically, as the mobile station M03 enters the service area 20 of a roadside station A for the first time, the controller 210 of the on-board unit M03 sends the dynamic code 62 including the destination code 62 to the roadside station A by using the vehicle ID field 104 of the frame 100. On receiving the dynamic code 60 from the mobile station M03, the roadside station A once stores it in the memory 42 and then transmits it to the telecommunications network 22 together with the other codes of the mobile station M03. These codes are switched by the telecommunications network 22, so that a code representative of a guidance request is transmitted to the system center 26.

The system center 26 received the destination code of the mobile station M03 selects an optimum route to the roadside station or destination E by taking account of the current traffic conditions also. Further, the system center 26 estimates the further movement of the mobile station M03 and thereby determines a roadside station B which can send a guidance code to the mobile station M03. In the case that the route indicated by a dotted line in FIG. 12 is the instructed optimum route, the system center 26 sends to the telecommunications network 22 a guidance code associated with a roadside station C which immediately follows the roadside station B to the roadside station or destination E. On receiving the guidance code meant for the mobile station M03, the roadside station B stores it in the memory 42 and monitors its own zone 20 in which the mobile station M03 is expected to enter.

When the roadside station B finds the mobile station M03 in its zone 20, it sends the guidance code destined to the station M03 by using the vehicle communication field 108 of the frame 100. As the mobile station M03 receives the guidance code, the controller 210 of the station M03 stores it in the memory 212 in the form of a guidance list as shown in FIG. 13. At the same time, the mobile station M03 receives from the roadside station B information which shows the surroundings of the station B, e. g. , a message "Crossroads X is located 300 meters ahead".

By comparing the roadside station information with the guidance list, the controlled 210 of the on-board unit M03 shows the vehicle occupant a direction for driving the vehicle 12. In this case, the on-board unit M03 instructs the occupant to make a left turn at the crossroads X which is situated 300 meters ahead, based on the command data being stored in the guidance list. For this instruction, the vocoder 280 may produce an audible message such as "Turn to the left at crossroads X which is located 300 meters ahead" or, alternatively, the display 256 may provide a simple visible direction command thereon.

As the mobile station M03 makes a left turn at the crossroads X to enter the zone 20 of the roadside station C, the roadside station C sends static data including its own position information and roadside station information to the mobile station M03 by using the introductory field 102. The controller 210 of the mobile station M03 compares the position data representative of the roadside station C with the guidance list and thereby sees that the way the mobile station M03 is following is right. Further, when the roadside station C sends roadside station information such as "Crossroads Y is located 200 meters ahead" to the mobile station M03, the mobile station M03 instructs the occupant to turn left at crossroads Y located 200 meters ahead, according to the command being stored in the guidance list. In this manner, the mobile station M03 is successfully guided to reach the destination or roadside station E by way of the roadside station D.

As stated above, in this particular embodiment, a subscriber vehicle 12 is allowed to arrive at a destination via an optimum route which best matches the instantaneous traffic conditions. Since the direction to travel is instructed by the on-board unit 16, the vehicle occupant needs only to steer the vehicle 12 as instructed and does not have to select a particular route by observing a map. In addition, the illustrative embodiment promotes the scattered flows of traffic because it is capable of grasping and controlling the traffic collectively. Furthermore, since the route which the on-board unit 16 commands is prepared by the system center 26 in matching relation to the current traffic conditions, the traffic as a whole can be prevented from centering around particular roads.

This embodiment may also be modified such that, when a mobile station 16 determines that it has been brought out of an expected route to the destination, it retransmits a guidance request to the system center 26, or such that a guidance code sent from the system center 26 is transmitted to a mobile station 16 in association with a change in the traffic conditions.

While the destination to be entered in the destination code 62 has been shown and described as comprising a roadside station 10 throughout the various embodiments, it may of course be replaced with any other kind of target such as the name of a specific place. If desired, a subscriber vehicle 12 may be provided with an automatic steering function to be steered automatically as instructed by a command from its on-board unit 16.

It is to be noted that the embodiments shown and described are applicable not only to an on-road vehicle telecommunications system but also to a system which implements communications between a system center and individuals, i. e. pedestrians in a broad sense.

While the present invention has been described with reference to the particular illustrative embodiments, it is not to be restricted by those embodiments but only by the appended claims. It is to be appreciated that those skilled in the art can change or modify the embodiments without departing from the scope of the present invention.

## Claims

1. A mobile telecommunications system comprising:
a plurality of base stations (10) each being communicatable with mobile stations (16) carried on vehicles (12) over a radio link of an electromagnetic wave to transmit and receive data on the radio link; and
a telecommunications network (22) interconnected to said plurality of base stations (10) for switching to said plurality of base stations communications of the data which have been received and are to be transmitted by said plurality of base stations (10),
said mobile telecommunications system comprising a system center (26) interconnected to said telecommunications network (22),
**characterized in that**
each mobile station (16) has an identification (50, 60) allotted specifically thereto,
said system center (26) being adapted for selecting an optimum route along which a specific vehicle carrying one of said mobile station reaches a destination to which said vehicle is directed to in a substantially shortest period of time under traffic conditions of vehicles presently available to said system center;
said plurality af base stations (10) each have an identification allotted specifically thereto and transmit base station data representative of the identification of respective ones of said plurality of base stations;
upon said mobile station (16) of said specific vehicle (12) transmitting a guidance request for asking for route guidance data, any of said plurality of base stations (10), when receiving the guidance request, transmits the guidance request to said telecommunications network (22), which in turn reports the guidance request to said system center (26);
said system center (26) selects, in response to the guidance request, an optimum route for the guidance request under the traffic conditions and transmits optimum route data representative of the selected optimum route to be destined to said mobile station (16) over said telecommunications network (22); and
upon receipt of the optimum route data, said mobile station (16) develops the base station data together with the optimum route data received to enable said vehicle to be guided on the optimum route selected by said system center (26).

2. A system according to claim 1, characterized in that upon receipt of the optimum route data, the mobile station (16) performs route guidance on the basis of the optimum route data and the base station data which is transmitted from said base station (10); and
the mobile station (16) compares the optimum route data with the base station data and, upon comparison result indicating that the mobile station has been brought out of the selected route, transmits the guidance request.

3. A system according to claim 1 or 2, characterized in that upon receipt of the guidance request,
said system center (26) transmits the optimum route data representative of the selected optimum route to be destined to the mobile station (16) over said telecommunications network (22) while memorizing a transmission of the optimum route data to the mobile station (16), and
said system center (26) updates traffic data under the traffic conditions available, and, upon determining when the optimum route data for the mobile station should be updated in compliance with a change in the traffic conditions, selects an optimum route for the mobile station on the basis of the updated traffic data and transmits optimum route data representative of the selected optimum route to be destined to the mobile station (16) over said telecommunications network (22).

4. A system according to any of the preceding claims, characterized in that said plurality of base stations (10) is communicatable with the mobile station over the radio link using a single frequency of the electromagnetic wave between geographically adjoining ones of said plurality of base stations, said plurality of base stations transmitting and receiving data with which the single frequency is modulated;
geographically adjoining ones of said plurality of base stations are spaced apart from each other with an area intervening in between in which the mobile station (16) is substantially not responsive to the electromagnetic wave on the radio link;
each of said plurality of base stations (10) establishes a miniature zone in which the single frequency of the electromagnetic wave is available to the mobile station (16), the miniature zone being so small in size that part of the data is transmitted between one of said plurality of base stations (10) and the mobile station (16) while the mobile station is in the miniature zone established by said one base station;
whereby said adjoining base stations (10) are allowed to share the single frequency of the electromagnetic wave to transmit a series of data to the mobile station (16) intermittently while the mobile station moves across the miniature zones established by adjoining ones of said plurality of base stations (10) with the area intervening in between.

5. A system according to any of the preceding claims, characterized in that the mobile station (16) develops, upon receiving the optimum route data and receiving the base station data from one of said plurality of base stations (10) which is also associated with the optimum route data, the message representative of any of the route comnand data which is associated with said one base station.

6. A system according to claim 5, characterized in that the mobile station (16) develops said message on a visible basis or an audible basis.

## Patentansprüche

1. Mobil-Telekommunikationssystem, das folgendes aufweist:
eine Vielzahl von Basisstationen (10), die jede über eine Funkverbindung einer elektromagnetischen Welle mit auf Fahrzeugen (12) mitgeführten mobilen Stationen (16) kommunizieren können, um auf der Funkverbindung Daten zu senden und zu empfangen, und
ein Telekommunikationsnetz (22), das mit der Vielzahl von Basisstationen (10) zusammengeschaltet ist, zur Vermittlung von Übermittlungen der Daten, die von der Vielzahl von Basisstationen (10) empfangen wurden und zu senden sind, an die Vielzahl von Basisstationen,
wobei das Mobil-Telekommunikationssystem eine Systemzentrale (26) aufweist, die mit dem Telekommunikationsnetz (22) zusammengeschaltet ist,
**dadurch gekennzeichnet, daß**
jede mobile Station (16) eine speziell ihr zugeordnete Kennung (50, 60) aufweist,
die Systemzentrale (26) dafür eingerichtet ist, eine optimale Strecke auszuwählen, entlang der ein spezielles Fahrzeug, das eine der mobilen Stationen mifführt, ein Ziel, nach dem das Fahrzeug gelenkt wird, unter Verkehrsbedingungen von Fahrzeugen, die der Systemzentrale gegenwärtig zur Verfügung stehen, in einer im wesentlichen kürzesten Zeitspanne erreicht,
die Vielzahl von Basisstationen (10) jede eine speziell ihr zugeordnete Kennung aufweisen und Basisstationsdaten senden, die die Kennung von jeweiligen Basisstationen aus der Vielzahl von Basisstationen darstellen,
auf das Senden einer Leitanforderung zum Anfordern von Streckenleitdaten durch die mobile Station (16) des speziellen Fahrzeugs (12) hin irgendeine aus der Vielzahl von Basisstationen (10), wenn sie die Leitanforderung empfängt, die Leitanforderung an das Telekommunikationsnetz (22) sendet, das wiederum die Leitanforderung der Systemzentrale (26) meldet,
die Systemzentrale (26) als Antwort auf die Leitanforderung eine optimale Strecke für die Leitanforderung unter den Verkehrsbedingungen auswählt und Optimalstreckendaten, die die ausgewählte optimale Strecke darstellen, die für die mobile Station (16) ausersehen ist, über das Telekommunikationsnetz (22) sendet, und
die mobile Station (16) auf den Empfang der Optimalstreckendaten hin die Basisstationsdaten zusammen mit den empfangenen Optimalstreckendaten bekannt gibt, um zu ermöglichen, daß das Fahrzeug auf der von der Systemzentrale (26) ausgewählten optimalen Strecke geleitet wird.

2. System nach Anspruch 1, dadurch gekennzeichnet, daß die mobile Station (16) auf den Empfang der Optimalstreckendaten hin auf der Basis der Optimalstreckendaten und der Basisstationsdaten, die von der Basisstation (10) gesendet werden, eine Streckenleitung durchführt und daß die mobile Station (16) die Optimalstreckendaten mit den Basisstationsdaten vergleicht und bei einem Vergleichsergebnis, das anzeigt, daß die mobile Station von der ausgewählten Strecke abgebracht wurde, die Leitanforderung sendet.

3. System nach Anspruch 1 oder 2, dadurch gekennzeichnet, daß auf den Empfang der Leitanforderung hin
die Systemzentrale (26) die Optimalstreckendaten, die die ausgewählte optimale Strecke darstellen, die für die mobile Station (16) ausersehen ist, über das Telekommunikationsnetz (22) sendet, wobei sie eine Übertragung der Optimalstreckendaten an die mobile Station (16) speichert, und
die Systemzentrale (26) Verkehrsdaten unter den zur Verfügung stehenden Verkehrsbedingungen aktualisiert und bei einer Feststellung, daß die Optimalstreckendaten für die mobile Station in Übereinstimmung mit einer Änderung der Verkehrsbedingungen zu aktualisieren sind, auf der Basis der aktualisierten Verkehrsdaten eine optimale Strecke für die mobile Station auswählt und Optimalstreckendaten, die die ausgewählte optimale Strecke darstellen, die für die mobile Station (16) ausersehen ist, über das Telekommunikationsnetz (22) sendet.

4. System nach einem der vorhergehenden Ansprüche, dadurch gekennzeichnet, daß die Vielzahl von Basisstationen (10) unter Verwendung einer einzelnen Frequenz der elektromagnetischen Welle zwischen einander geographisch benachbarten Basisstationen aus der Vielzahl von Basisstationen über die Funkverbindung mit der mobilen Station kommunizieren können, wobei die Vielzahl von Basisstationen Daten senden und empfangen, mit denen die einzelne Frequenz moduliert ist,
einander geographisch benachbarte Basisstationen aus der Vielzahl von Basisstationen im Abstand voneinander angeordnet sind, mit einem dazwischen liegenden Gebiet, in dem die mobile Station (16) im wesentlichen nicht auf die elektromagnetische Welle auf der Funkverbindung anspricht,
jede aus der Vielzahl von Basisstätionen (10) eine Kleinzone herstellt, in der der mobilen Station (16) die einzelne Frequenz der elektromagnetischen Welle zur Verfügung steht, wobei die Kleinzone eine so geringe Größe aufweist, daß ein Teil der Daten zwischen einer aus der Vielzahl von Basisstationen (10) und der mobilen Station (16) übertragen wird, während sich die mobile Station in der von der einen Basisstation hergestellten Kleinzone befindet,
wodurch die einander benachbarten Basisstationen (10) die einzelne Frequenz der elektromagnetischen Welle gemeinsam benutzen dürfen, um intermittierend eine Folge von Daten an die mobile Station (16) zu senden, während sich die mobile Station über die Kleinzonen hinweg bewegt, die durch einander benachbarte Basisstationen aus der Vielzahl von Basisstationen (10) eingerichtet wurden, zwischen denen das Gebiet liegt.

5. System nach einem der vorhergehenden Ansprüche, dadurch gekennzeichnet, daß die mobile Station (16) auf den Empfang der Optimalstreckendaten und den Empfang der Basisstationsdaten von einer aus der Vielzahl von Basisstationen (10), die außerdem den Optimalstreckendaten zugeordnet ist, hin die Nachricht bekannt gibt, die irgendwelche der Streckenkommandodaten darstellt, die der einen Basisstation zugeordnet sind.

6. System nach Anspruch 5, dadurch gekennzeichnet, daß die mobile Station (16) die Nachricht auf einer sichtbaren Basis oder einer hörbaren Basis bekannt gibt.

## Revendications

1. Système de télécommunications mobile comprenant :
une pluralité de postes de base (10) aptes chacun à communiquer avec des postes mobiles (16) disposés dans des véhicules (12) par l'intermédiaire d'une liaison radio de transmission d'une onde électromagnétique pour émettre et recevoir des données dans la liaison radio; et
un réseau de télécommunications (22) interconnecté à ladite pluralité de postes de base (10) pour commuter, vers ladite pluralité de postes de base, des communications des données, qui ont été reçues et doivent être émises par ladite pluralité de postes de base (10),
ledit système de télécommunications mobile comprenant un centre du système (26) interconnecté audit réseau de télécommunications (22),
caractérisé en ce que
chaque poste mobile (16) possède une identification (50, 60), qui lui est affectée de façon spécifique,
ledit centre (26) du système étant adapté pour sélectionner un itinéraire optimum, sur lequel un véhicule spécifique portant l'un desdits postes mobiles atteint une destination, vers laquelle ledit véhicule se dirige, en l'intervalle de temps sensiblement le plus bref dans des conditions de trafic de véhicules actuellement disponibles au niveau dudit centre du système;
ladite pluralité de postes de base (10) possèdent chacun une identification qui lui est allouée de façon spécifique et émettent des données des postes de base, qui sont représentatives de l'identification de postes respectifs parmi ladite pluralité de postes de base;
lorsque ledit poste mobile (16) dudit véhicule spécifique (12) émet une demande de guidage pour obtenir des données de guidage sur un itinéraire, l'un quelconque de ladite pluralité de postes de base (10) envoie la demande de guidage, lorsqu'il la reçoit, audit réseau de télécommunications (22), qui à son tour signale la demande de guidage audit centre (26) du système;
en réponse à la demande de guidage, ledit centre (26) du système sélectionne un itinéraire optimum pour la demande de guidage dans les conditions de trafic et envoie les données de l'itinéraire optimum qui sont représentatives de l'itinéraire optimum sélectionné et qui sont destinées audit poste mobile (16), par l'intermédiaire dudit réseau de télécommunications (22); et
lors de la réception des données de l'itinéraire optimum, ledit poste mobile (16) développe les données du poste de base ainsi que les données de l'itinéraire optimum reçues pour permettre le guidage dudit véhicule sur l'itinéraire sélectionné par ledit centre (26) du système.

2. Système selon la revendication 1, caractérisé en ce que lors de la réception des données de l'itinéraire optimum, le poste mobile (16) effectue un guidage d'itinéaire sur la base des données de l'itinéraire optimum et des données du poste de base qui sont émises par ledit poste de base (10); et
le poste mobile (16) compare les données de l'itinéraire optimum aux données du poste de base et transmet la demande de guidage lorsque le résultat de comparaison indique que le poste mobile s'est écarté de l'itinéraire sélectionné.

3. Système selon la revendication 1 ou 2, caractérisé en ce que lors de la réception de la demande de guidage,
ledit centre (26) du système envoie les données de l'itinéraire représentatives de l'itinéraire optimum sélectionné, qui sont destinées au poste mobile (16), par l'intermédiaire dudit réseau de télécommunications (22), tout en mémorisant une transmission des données de l'itinéraire optimum au poste mobile (16), et
ledit centre (26) du système met à jour les données de trafic dans les conditions de trafic disponibles et, lors de la détermination de moments où les données de l'itinéraire optimum pour le poste mobile doivent être mises à jour en fonction d'une modification des conditions de trafic, sélectionne un itinéraire pour le poste mobile sur la base des données de trafic mises à jour et envoie les données de l'itinéraire optimum représentatives de l'itinéraire sélectionné, qui sont destinées au poste mobile (16) par l'intermédiaire dudit réseau de télécommunications (22).

4. Système selon l'une quelconque des revendications précédentes, caractérisé en ce que ladite pluralité de postes de base (10) peuvent communiquer avec le poste mobile par l'intermédiaire de la liaison radio en utilisant une seule fréquence de l'onde électromagnétique entre des postes de base, qui sont voisins géographiquement, parmi ladite pluralité de postes de base, ladite pluralité de postes de base émettant et recevant des données avec lesquelles la fréquence unique est modulée;
des postes de base, qui sont voisins géographiquement, parmi ladite pluralité de postes de base sont séparés les uns des autres par une zone intercalaire, dans laquelle le poste mobile (16) n'est essentiellement pas sensible à l'onde électromagnétique de la liaison radio;
chacun de ladite pluralité de postes de base (10) établit une zone miniature, dans laquelle la fréquence unique de l'onde électromagnétique est disponible pour le poste mobile (16), la zone miniature ayant des dimensions suffisamment faibles pour qu'une partie des données soit transmise entre un poste de ladite pluralité de postes de base (10) et le poste mobile (16), alors que le poste mobile est dans la zone miniature établie par ledit poste de base;
lesdits postes de base voisins (10) peuvent utiliser en commun la fréquence unique de l'onde électromagnétique pour envoyer de façon intermittente une série de données au poste mobile (16), tandis que le poste mobile se déplace dans les zones miniatures établies par des postes voisins faisant partie de ladite pluralité de postes de base (10), qui sont séparés par la zone.

5. Système selon l'une quelconque des revendications précédentes, caractérisé en ce que lorsqu'il reçoit les données de l'itinéraire optimum et qu'il reçoit les données de base en provenance de l'un de ladite pluralité de postes de base (10), qui est également associé aux données de l'itinéraire optimum, le poste mobile (16) produit le message représentatif de l'une quelconque des données de commande de l'itinéraire optimum, qui est associée audit poste de base.

6. Système selon la revendication 5, caractérisé en ce que le poste mobile (16) produit ledit message sur une base visible ou sur une base audible.
